# EUROPÄISCHE PATENTSCHRIFT

(11) **EP 3 479 187 B1**
(45) Veröffentlichungstag und Bekanntmachung des Hinweises auf die Patenterteilung: **03.03.2021**
(21) Anmeldenummer: 17735047.7
(22) Anmeldetag: 26.06.2017
(51) Int. Cl.: G05G 1/10

(54) **ANORDNUNG AUS ELEKTRISCHER PIXELMATRIXANZEIGE UND DREHSTELLER MIT VERBESSERTEM LICHTLEITER**
ARRANGEMENT OF ELECTRIC PIXEL MATRIX DISPLAY AND ROTARY ACTUATOR WITH IMPROVED LIGHT GUIDE
ENSEMBLE COMPOSÉ D'UN ÉCRAN ÉLECTRIQUE À MATRICE DE POINTS ET ACTIONNEUR ROTATIF COMPRENANT UN GUIDE DE LUMIÈRE AMÉLIORÉ

(30) Priorität: 30.06.2016 DE 102016112028
(43) Veröffentlichungstag der Anmeldung: 08.05.2019
(73) Patentinhaber: Preh GmbH, 97616 Bad Neustadt a. d. Saale (DE)
(72) Erfinder: SCHUBERT, Michael, 96450 Coburg (DE); GLIENICKE, Haiko, 97422 Schweinfurt (DE)
(74) Vertreter: Lohmanns, Bernard
(86) Internationale Anmeldenummer: PCT/EP2017/065674
(87) Internationale Veröffentlichungsnummer: WO 2018/001945

(56) Entgegenhaltungen:
- WO-A1-2012/048852
- CN-A- 101 493 543
- DE-A1- 10 255 839
- DE-A1-102010 010 574
- DE-A1-102013 208 088
- GB-A- 2 376 284
- US-A1- 2006 207 867

## Beschreibung

Die Erfindung betrifft eine Anordnung, welche einen Drehsteller mit Mitteln zur Drehstellungsdetektion sowie eine elektronische Pixelmatrixanzeige, die eine äußere transparente Schicht aufweist, umfasst. Der Drehsteller ist drehbeweglich mittels Lagerungsmittel auf der transparenten Schicht angeordnet. Eine derartige Anordnungskombination wird zunehmend beliebter, da einerseits aufgrund der flexiblen Anzeigemöglichkeiten der elektronischen Pixelmatrixanzeige dem Drehsteiler vielfältige Funktionen und Funktionshinweise zugeordnet werden können und andererseits der Drehsteller mit seinem Betätigungsteil ein gewohntes haptisches Feedback liefert und leicht vom Fahrer ohne Sichtkontakt ertastet werden kann. Aufgrund der Anordnung des Drehstellers auf der in der Regel horizontal oder bezüglich des Schwerefeldes schräg ausgerichteten, transparenten Schicht der elektronischen Pixelmatrixanzeige besteht einerseits das Problem, dass die Anordnung von elektrisch zu versorgenden Leuchtmitteln auf der transparenten Schicht eine unerwünschte konstruktive Veränderung der elektronischen Pixelmatrixanzeige erforderlich macht. Andererseits ist die von der elektronischen Pixelmatrixanzeige erreichte Lichtintensität nicht ausreichend, eine wahrnehmbare, insbesondere unter Tageslichtbedingungen erkennbare Leuchtmarkierung bereitzustellen.

Vor diesem Hintergrund bestand Bedarf nach einer Lösung, bei der die Beleuchtung eines auf einer elektronischen Pixelmatrixanzeige angeordneten Drehstellers verbessert ist, ohne dass neben der für die Pixelmatrixanzeige notwendigen Leuchtmittel zusätzliche Leuchtmittel vorzusehen sind. Diese Aufgabe wird durch eine Anordnung gemäß Anspruch 1 gelöst. Eine gleichermaßen vorteilhafte Verwendung ist Gegenstand des Verwendungsanspruchs. Vorteilhafte Ausgestaltungen sind jeweils Gegenstand der abhängigen Ansprüche. Es ist darauf hinzuweisen, dass die in den Ansprüchen einzeln aufgeführten Merkmale in beliebiger, technologisch sinnvoller Weise miteinander kombiniert werden können und weitere Ausgestaltungen der Erfindung aufzeigen. Die Beschreibung, insbesondere im Zusammenhang mit den Figuren, charakterisiert und spezifiziert die Erfindung zusätzlich. Die US 2006/207867 A1 offenbart eine Anordnung aus elektrischer Pixelmatrixanzeige und Drehsteller gemäß dem Oberbegriff des Anspruchs 1.

Die Erfindung betrifft eine Anordnung aus einem Drehsteller sowie einer elektronischen Pixelmatrixanzeige. Der Drehsteller weist ein über Lagerungsmittel um eine Drehachse drehbeweglich gelagertes, beispielsweise ringförmiges oder als Haube oder Knopf ausgestaltetes, Betätigungsteil auf. Ferner sind Mittel zur Drehstellungsdetektion, d.h. Mittel die geeignet sind, die Stellung und/oder die Stellungsänderung des Betätigungsteils zu detektieren, vorgesehen. Beispielsweise umfassen die Lagerungsmittel ein Gleit- oder Wälzlager, wie ein Kugellager. Bevorzugt handelt es sich um berührungslos detektierende Mittel zur Drehstellungsdetektion, beispielsweise optisch detektierende Mittel. Die Anordnung umfasst eine elektronische Pixelmatrixanzeige, die eine transparente, äußere Schicht umfasst. Beispielsweise handelt es sich um eine hintergrundbeleuchtete Flüssigkristallanzeige, beispielsweise im TFT-Aufbau, oder eine Anzeige in OLED-Bauweise.

Erfindungsgemäß ist der Drehsteller auf der transparenten Schicht angeordnet. Die äußere transparente Schicht ist beispielsweise eine Kunststoffschicht, bevorzugt eine oberflächengehärtete Kunststoffschicht, um beispielsweise die darunter liegende Elektrodenstruktur einer kapazitiven Sensorik oder die Polarisationsschicht der elektrischen Anzeige vor Beschädigung zu schützen. Beispielsweise handelt es sich bei der transparenten Schicht um eine Glasschicht.

Erfindungsgemäß weist ferner der Drehsteller einen Lichtleiter auf, der ausgebildet ist, Licht mehrerer Pixel der Pixelmatrixanzeige von einer Lichteintrittsfläche des Lichtleiters zu einer Lichtaustrittsfläche des Lichtleiters in Richtung einer oder in eine Leuchtfläche des Drehstellers, insbesondere des Betätigungsteils, zu leiten. Bevorzugt wird das Licht von mehreren Pixeln des Bereichs der Pixelmatrixanzeige, der durch den Drehsteller abgedeckt ist, in den Lichtleiter eingebracht, wobei die Lichteintrittsfläche des Lichtleiters benachbart diesen Pixeln angeordnet ist. Beispielsweise handelt es sich bei den Pixeln um eine Gruppe von einigen wenigen bis einigen Dekaden, wie 2 bis 50, Pixeln, die der Lichteintrittsfläche, gegebenenfalls in Abhängigkeit der Stellung des Lichtleiters, zugeordnet sind.

Indem das Licht der Pixelmatrixanzeige für die stellungsabhängige Leuchtmarkierung, Funktionsbeleuchtung oder eine allgemeine Beleuchtung, wie eine sogenannte Coronabeleuchtung, verwendet wird, können separate Leuchtmittel, die beispielsweise zwischen dem Drehsteller und der transparenten Schicht an zu ordnen wären und deren elektrische Versorgung, die beispielsweise die Pixelmatrixanzeige durchbrechend anzuordnen wären, eingespart werden.

Die elektronische Pixelmatrixanzeige ist in einer Ausgestaltung eine berührungsempfindliche, elektronische Pixelmatrixanzeige, bevorzugt eine berührungsempfindliche, elektronische Pixelmatrixanzeige mit kapazitiver Berührdetektion.

Gemäß einer bevorzugten Ausgestaltung ist vorgesehen, dass die Leuchtfläche durch die Lichtaustrittsfläche des Lichtleiters definiert ist. D.h. der Lichtleiter definiert die Leuchtfläche, beispielsweise ist der Lichtleiter in den Drehsteller integriert.

Bevorzugt ist der Lichtleiter starr mit dem Betätigungsteil verbunden. Somit bewegt sich der Lichtleiter synchron bei Drehbetätigung mit dem Betätigungsteil. Beispielsweise ist eine kraft- und/oder formschlüssige Verbindung zwischen dem Betätigungsteil und dem Lichtleiter vorgesehen. In einer bevorzugten Ausgestaltung ist die elektronische Pixelmatrixanzeige ausgelegt, eine von der Stellung des Drehstellers abhängige Ansteuerung der elektronischen Pixelmatrixanzeige vorzusehen, wobei beispielsweise lediglich der Bereich der elektronischen Pixelmatrixanzeige, der sich unterhalb des Drehstellers befindet und benachbart der Lichteintrittsfläche des Lichtleiters angeordnet selektiv angesteuert, d.h. zum Leuchten gebracht wird, um die Gefahr eines ungewollten Lichtaustritts zu vermeiden.

Gemäß einer bevorzugten Variante wird die Lichteintrittsfläche durch eine Matrix, bevorzugt den Pixeln zugeordneten, Linsenelementen definiert. Beispielsweise ist eine Reihe oder eine Matrix von Sammellinsen als Lichteintrittsfläche vorgesehen, deren relative Anordnung bzw. Abstand dem der Pixelmatrix entspricht.

Um Bauraum für andere Komponenten im Innern des Drehstellers, wie einen zentralen zusätzlichen Lichtleiter für eine Funktionsanzeige, bereitzuhalten, weist gemäß einer bevorzugten Variante der Lichtleiter wenigstens zwei Reflexionsflächen auf, so dass die den Pixeln zugeordneten, geometrischen Lichtverläufe zwischen Lichteintrittsfläche und Lichtaustrittsfläche eine Richtungsumlenkung zwischen 30 ° bis 70°, wie 45°, erfahren.

Bevorzugt weist wenigstens eine der Reflexionsflächen eine Krümmung auf.

Noch bevorzugter weist wenigstens einer der Reflexionsflächen eine Krümmung mit einer zugehörigen Krümmungsebene auf, wobei die den Pixeln zugeordneten, geometrischen Lichtverläufe zwischen Lichteintrittsfläche und Lichtaustrittsfläche in der Krümmungsebene angeordnet sind. Beispielsweise wird so eine Fokussierung des durch den Lichtleiter eingefangenen Lichtes der mehreren Pixel als Lichtquellen erreicht. Bevorzugt ist der Lichtleiter ausgebildet, dass die minimale, aus der Lichtaustrittsfläche austretende Lichtintensität höher ist als die maximale, auf die Lichteintrittsfläche einfallende Lichtintensität.

Gemäß einer bevorzugten Ausgestaltung ist der Lichtleiter so angeordnet, dass keine Fläche des Lichtleiters oder lediglich die Lichtaustrittsfläche eine äußere Oberfläche des Betätigungsteils definiert, beispielsweise ist der Lichtleiter bis auf die Lichtaustrittsfläche in dem durch das Betätigungsteil definierten Volumen angeordnet. Durch diese Anordnung kann auf eine Beschichtung des Lichtleiters aus opakem Material, um einen unerwünschten Lichtaustritt aufgrund der Abschottung durch das opake Material zu vermeiden, verzichtet werden. Beispielsweise ist bei einer Anordnung des Lichtleiters auf einer Außenseite des Betätigungsteils eine Beschichtung einer nach außen weisenden Oberfläche des Lichtleiters mit opakem Material notwendig. Eine solche Beschichtung weist Nachteile auf, da sie die Totalreflexion beeinträchtigt und damit die Intensität des aus der Lichtaustrittsfläche austretenden Lichtes senkt.

Bevorzugt ist der Lichtleiter ebenensymmetrisch ausgebildet.

Gemäß einer bevorzugten Ausgestaltung weist der Lichtleiter diffus eingefärbtes Material auf. Beispielsweise ist der Lichtleiter aus diffus eingefärbtem Material hergestellt. Gemäß einer weiteren Ausgestaltung weist der Lichtleiter nur bereichsweise das diffus eingefärbte Material auf. Beispielsweise ist der Lichtleiter bis auf einen an die Lichtaustrittsfläche angrenzenden Bereich, welcher diffus eingefärbt ist, aus transparentem Material hergestellt. Ein solcher Lichtleiter wird beispielsweise in einem 2K-Spritzverfahren aus Kunststoff hergestellt. Die durch die diffuse Einfärbung bewirkte Lichtstreuung hat den Vorteil, dass der Lichtaustritt an der Lichtaustrittsfläche des Lichtleiters trotz der mehreren als annähernd punktförmige Lichtquellen anzusehenden Pixel der Pixelmatrixanzeige über diese Austrittsfläche gleichmäßiger wird, so dass beispielsweise anhand der Lichtverteilung der Austrittsfläche die Pixelstruktur nicht mehr erkennbar ist.

Gemäß einer bevorzugten Ausgestaltung weist der Lichtleiter einen sich bis zur Lichtaustrittsfläche erstreckenden Endabschnitt und zwei bezüglich einer Erstreckungsrichtung des Endabschnitts sich seitlich abzweigende Ausleger auf, an denen jeweils eine Lichteintrittsfläche ausgebildet ist. Bevorzugt erstrecken sich die Ausleger in einer der Drehrichtung folgenden oder einer tangential zur Drehrichtung weisenden Richtung.

Gemäß einer bevorzugten Ausgestaltung ist der Lichtleiter wenigstens abschnittsweise, insbesondere der Endabschnitt, konusförmig ausgebildet. Bevorzugt ist er sich in Richtung des auf die Lichtaustrittsfläche gerichteten geometrischen Strahlenverlaufs konusförmig verjüngend ausgebildet.

Gemäß einer weiteren Ausgestaltung ist in dem Drehsteller wenigstens ein zentraler Durchbruch vorgesehen, um die Sichtbarmachung und/oder die optische Projektion mittels der elektronischen Pixelmatrixanzeige durch den Durchbruch hindurch zu ermöglichen. Beispielsweise ist lediglich ein Durchbruch vorgesehen, damit der Bediener durch den Durchbruch hindurch auf den darunter liegenden Teilbereich der Anzeige blicken kann und das darauf zur Anzeige gebrachte Funktionssymbol betrachten zu können. Gemäß einer bevorzugten Ausgestaltung der Anordnung ist in dem Durchbruch ein Lichtleiter oder eine in dem Durchbruch angeordnete Projektionsschicht oder eine in dem Durchbruch angeordnete Optik, wie eine Projektionsoptik, vorgesehen. Als Optik wird beispielsweise auch ein Linsenarray aus in einer zur Anzeige parallelen Ebene angeordneten Linsen oder ein Bildleiter verstanden. Erfindungsgemäß kann auch eine Kombination aus den vorgenannten Elementen vorgesehen sein.

Der Lichtleiter, die Projektionsschicht und/oder die Optik sind beispielsweise formschlüssig, beispielsweise mittels einer Bajonettverbindung, mit der transparenten Schicht verbunden. Gemäß einer bevorzugten Ausgestaltung ist der Lichtleiter, die Projektionsschicht und/oder die Optik stoffschlüssig oder kraftschlüssig mit der transparenten Schicht verbunden. Beispielsweise ist eine adhäsive Verbindung und/oder eine Rastverbindung vorgesehen. Alternativ können die vorgenannten Elemente einstückig mit der transparenten Schicht ausgebildet sein.

Beispielsweise wird die Einstückigkeit in einem formgebenden Verfahren in einem gemeinsamen Spritzschritt oder in einem mehrstufigen Spritzverfahren erreicht.

Gemäß einer weiteren Ausgestaltung umfassen die Lagerungsmittel Mittel zur Erzeugung einer Rasthaptik bei einer händischen Drehverstellung des Drehstellers, wobei diese Mittel zur Erzeugung einer Rasthaptik beispielsweise eine Rastkontur und eine damit zusammenwirkende Rastfeder umfassen.

Bevorzugt umfassen die Lagerungsmittel ein Gleit- oder Wälzlager, wobei dessen Innenbahn, beispielsweise die innerer Laufbahn für die Wälzkörper oder die innere Gleitbahn, in Richtung des Bedieners, in der Regel nach oben, versetzt zur transparenten Schicht auf einem Sockel, bevorzugt ringförmigen Sockel, angeordnet ist oder der Sockel eine Innenbahn des Gleit-Wälzlagers definiert, die in Richtung des Bedieners, in der Regel nach oben, versetzt zur transparenten Schicht angeordnet ist.

Die Erfindung betrifft ferner die Verwendung der zuvor beschriebenen Anordnung in einer ihrer Ausgestaltungen in einem Kraftfahrzeug. Beispielsweise ist die Anordnung in einer Mittelkonsole des Kraftfahrzeugs angeordnet.

Die Erfindung wird anhand der nachfolgenden Figuren näher erläutert. Die Figuren sind dabei nur beispielhaft zu verstehen und stellen lediglich bevorzugte Ausführungsvarianten dar. Es zeigen:
- Fig. 1: eine perspektivische Explosionsansicht einer ersten Ausführungsform der erfindungsgemäßen Anordnung;
- Fig. 2: eine Schnittansicht durch den in Figur 1 gezeigten Lichtleiter der ersten Ausführungsform der erfindungsgemäßen Anordnung;
- Fig. 3: eine Teilschnittansicht durch eine zweite Ausführungsform der erfindungsgemäßen Anordnung.

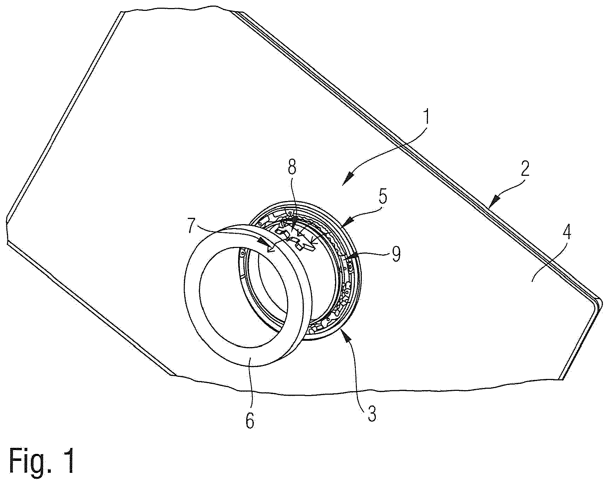

Figur 1 zeigt eine erste Ausführungsform der erfindungsgemäßen Anordnung 1. Die Anordnung umfasst erfindungsgemäß eine elektronische Pixelmatrixanzeige 2 und einen Drehsteller 3, der auf der elektronischen Pixelmatrixanzeige 2 angeordnet ist. Die elektronische Pixelmatrixanzeige 2 weist einen unteren Schichtaufbau auf, der im Wesentlichen der Visualisierung von elektronischen Daten, wie der Visulisierung eines der Funktonalität des Drehstellers 3 zugeordneten Funktionssymbols oder einer Skala dient. Im vorliegenden Fall handelt es sich um einen herkömmlichen Schichtaufbau in TFT-Technologie. Die elektronische Pixelmatrixanzeige 2 ist berührempfindlich ausgelegt, so sind beispielsweise eine transparente Klebeschicht sowie ein transparentes Elektrodenarray zur Bereitstellung einer kapazitiven ortsauflösenden Berührsensorik vorgesehen. Die elektronische Pixelmatrixanzeige weist eine obere transparente Schicht 4 aus Kunststoff auf, die eine äußere, hier obere, Fläche definiert, auf der der Drehsteller 2 angeordnet ist. Der Drehsteller 2 weist ein ringförmiges Betätigungsteil 6 aus opakem Material auf, das drehbar auf der transparenten Schicht 4 befestigt ist. Das Betätigungsteil 6 ist mittels Lagerungsmittel 5, hier einem ringförmigen Sockel, an der transparenten Schicht 4 befestigt, beispielsweise verklebt. Die Lagerungsmittel 5 weisen ferner eine Rastkontur 9 auf, die mit einer nicht dargestellten, betätigungsteilseitigen Rastnase zusammenwirken, um ein haptisches Feedback, hier eine Rasthaptik, bei der Drehbetätigung des Betätigungsteils 6 bereitzustellen. Der Drehsteller 3 weist ferner einen mit dem Betätigungsteil 6 starr verbundenen und somit mit dem Betätigungsteil 6 sich synchron bewegbaren Lichtleiter 8 auf, der ausgebildet ist, Licht von der elektronischen Pixelmatrixanzeige 2, insbesondere von einer von der Stellung des Betätigungsteils 6 und damit des Lichtleiters 8 abhängigen Auswahl von Pixeln zu einer in der äußeren Oberfläche des Betätigungsteils 6 angeordneten Leuchtfläche 7 zu leiten. Diese Pixel gehören zu dem Bereich der elektronischen Pixelmatrixanzeige 2, die unterhalb des Drehstellers 3 angeordnet sind. Der Sockel 5 weist dazu einen umlaufenden Schlitz auf.

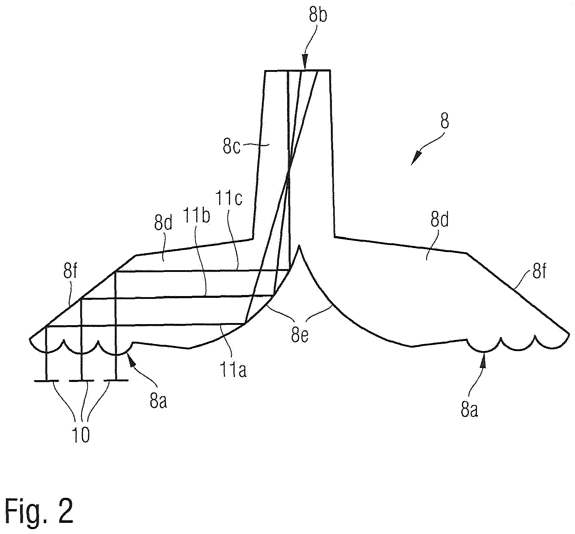

Anhand der Figur 2 wird der Aufbau des aus transparentem Material bestehenden Lichtleiters 8 näher erläutert, der in der ersten Ausführungsform der Figur 1 verwendet wird. Dieser dient der Lichtführung von mehreren Lichteintrittsflächen 8a zu einer Lichtaustrittsfläche 8b, wobei letztere bei der Anordnung am Betätigungsteil 6 der Figur 1 die Leuchtfläche 7 definiert. Die Lichtaustrittsfläche 8b gehört zu einem sich konisch in Richtung der Lichtaustrittsfläche 8b verjüngenden Endabschnitt 8c des Lichtleiters 8. Die Lichteintrittsflächen 8a, die jeweils durch ein Array von Sammellinsen definiert sind und deren Anordnung und Abstand in etwa dem Array aus unmittelbar benachbarten Pixeln 10 der elektronischen Pixelmatrixanzeige entsprechen, sind an seitlichen, in den Endabschnitt 8c mündenden Auslegern 8d des Lichtleiters 8 ausgebildet. Zur Umlenkung und Fokussierung des vom Lichtleiter 8 geführten Lichtes, dessen Verlauf jeweils durch die geometrischen Lichtverläufe 11a, 11b und 11 c angedeutet ist, sind ebene Oberflächen 8f oder gekrümmte Oberflächen 8e, die jeweils als reflektierende Grenzflächen wirken, vorgesehen. Die Ausbildung des Lichtleiters 8 ist so gewählt, dass das Licht der mehreren Pixel 10 über eine oder mehrere, der Anordnung der Pixel 10 entsprechend ausgedehnte, den Pixeln 10 zugewandte Lichteintrittsflächen 8a eingefangen wird und auf eine gegenüber der Gesamtausdehnung der Lichteintrittsflächen 8a verkleinerte Lichtaustrittsfläche 8b fokussiert wird, um an dieser Stelle einen Lichtaustritt mit vergleichsweise hoher Lichtintensität zu erreichen, ohne dass neben der elektronischen Pixelmatrixanzeige 2 zusätzliche Leuchtmittel erforderlich wären.

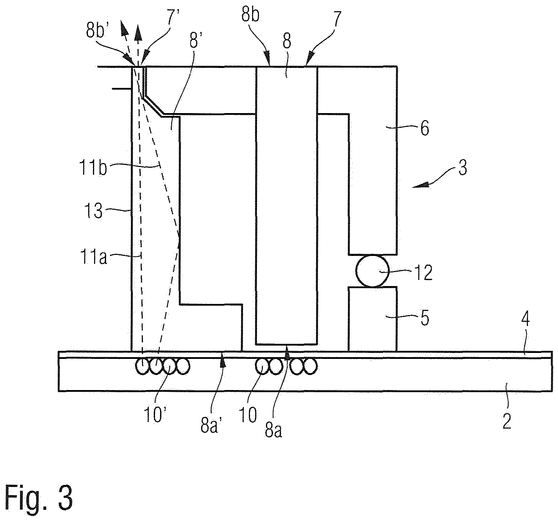

Figur 3 zeigt eine zweite Ausführungsform der erfindungsgemäßen Anordnung. Diese Ausführungsform weist einen Drehsteller 3 auf. Der Drehsteller 3 umfasst ein Betätigungsteil 6, das mittels der als Wälzlager 12, 5 ausgebildeten Lagerungsmittel auf einer transparenten Schicht 4 einer elektronischen Pixelmatrixanzeige 2 drehbeweglich gelagert ist. Es ist ein Lichtleiter 8' aus transparentem Material vorgesehen, der mit der transparenten Schicht 4 verklebt ist. Er weist eine Beschichtung 13 aus opakem Material, beispielsweise einem opaken Lack, auf, um unerwünschten Lichtaustritt zu vermeiden. Der Lichtleiter 8' weist einen unteren Teil, der eine den Pixeln 10' zugewandte Lichteintrittsfläche 8a' definiert, auf. Der Lichtleiter 8' ist so ausgebildet, dass er das von den Pixeln 10' eingefangene Licht gegebenenfalls unter Reflexion an den Grenzflächen des Lichtleiters 8' in Richtung der Lichtaustrittsfläche 8b' leitet. Beispielsweise ist der Lichtleiter 8' ringförmig ausgebildet und definiert eine ringförmig umlaufende, ruhende Leuchtfläche 7', als sogenannte Coronabeleuchtung. Es ist ferner ein weiterer Lichtleiter 8 aus transparentem Material vorgesehen, der Licht von den Pixeln 10 über seine den Pixeln 10 zugewandte Lichteintrittsfläche 8a einfängt und zu der Lichtaustrittsfläche 8b leitet, die eine in der Oberfläche des Betätigungsteils 6 eingelassene Leuchtfläche 7 definiert. Der weitere Lichtleiter 8 ist starr mit dem Betätigungsteil 6 verbunden und bewegt sich synchron mit dem Betätigungsteil 6 unter Beibehalt eines lichten Abstandes über die transparente Schicht 4 der elektronischen Pixelmatrixanzeige 2. Die Leuchtfläche 7 dient als optisch erkennbare Stellungsmarkierung des Betätigungsteils 6. Zur Vermeidung von unerwünschtem Lichtaustritt wird in einer Ausgestaltung der unter dem Drehsteller 3 befindliche Bereich der elektronischen Pixelmatrixanzeige 2 so stellungsabhängig angesteuert, dass abgesehen von den Pixeln 10' lediglich die Pixel 10 aktiviert werden, die je nach Stellung des Betätigungsteils 6 bzw. des weiteren Lichtleiters 8 nächstbenachbart der Lichteintrittsfläche 8a des weiteren Lichtleiters 8 angeordnet sind.

## Patentansprüche

1. Anordnung aufweisend:
einen Drehsteller (2);
eine elektronische Pixelmatrixanzeige (2), die eine transparente äußere Schicht (4) umfasst;
wobei der Drehsteller (3) ein Betätigungsteil (6) und Mittel zur Drehstellungsdetektion aufweist, wobei das Betätigungsteil (6) um eine Drehachse entlang einer Drehrichtung drehbeweglich mittels Lagerungsmittel (5, 12) gelagert ist und der Drehsteller (3) auf der transparenten Schicht (4) angeordnet ist; und wobei ferner der Drehsteller (3) einen Lichtleiter (8, 8') aufweist, der ausgebildet ist, Licht mehrerer Pixel (10, 10') der Pixelmatrixanzeige (2) von einer Lichteintrittsfläche (8a, 8a') des Lichtleiters (8, 8') zu einer Lichtaustrittsfläche (8b, 8b') des Lichtleiters (8, 8') in Richtung einer oder in eine Leuchtfläche (7, 7') des Drehstellers (3) oder des Betätigungsteils (6) zu leiten
**dadurch gekennzeichnet, dass**
der Lichtleiter (8, 8') so ausgebildet ist, dass das Licht der mehreren Pixel (10, 10') über mehrere der Anordnung der Pixel (10, 10') entsprechend ausgedehnte, den Pixeln (10, 10') zugewandte Lichteintrittsflächen (8a, 8a') eingefangen wird und auf eine gegenüber einer Gesamtausdehnung der Lichteintrittsflächen (8a, 8a') verkleinerte Lichtaustrittsfläche (8b, 8b') fokussiert wird.

2. Anordnung gemäß Anspruch 1, wobei die Leuchtfläche (7, 7') durch die Lichtaustrittsfläche (8a, 8a') des Lichtleiters (8, 8') definiert ist.

3. Anordnung gemäß einem der vorhergehenden Ansprüche, wobei der Lichtleiter (8) starr mit dem Betätigungsteil (6) verbunden ist.

4. Anordnung gemäß einem der vorhergehenden Ansprüche, wobei die Lichteintrittsfläche (8a) durch eine Matrix, bevorzugt den Pixeln zugeordneten, Linsenelementen definiert ist.

5. Anordnung gemäß einem der vorhergehenden Ansprüche, wobei der Lichtleiter (8) wenigstens zwei Reflexionsflächen (8e, 8f) aufweist, dass die den Pixeln zugeordneten, geometrischen Lichtverläufe (11a, 11b, 11c) zwischen Lichteintrittsfläche (8a) und Lichtaustrittsfläche (8) eine Richtungsumlenkung zwischen 30° bis 70°, wie 45°, erfährt.

6. Anordnung gemäß dem vorhergehenden Anspruch, wobei wenigstens eine der Reflexionsflächen (8e) eine Krümmung mit einer zugehörigen Krümmungsebene aufweist, wobei die den Pixeln zugeordneten, geometrischen Lichtverläufe (11a, 11b, 11c) zwischen Lichteintrittsfläche (8a) und Lichtaustrittsfläche (8b) in der Krümmungsebene angeordnet sind.

7. Anordnung gemäß einem der vorhergehenden Ansprüche, wobei der Lichtleiter (8') in dem durch das Betätigungsteil (6) definierten Volumen angeordnet ist.

8. Anordnung gemäß einem der vorhergehenden Ansprüche, wobei der Lichtleiter (8) ebenensymmetrisch ausgebildet ist.

9. Anordnung gemäß einem der vorhergehenden Ansprüche, wobei der Lichtleiter diffus eingefärbtes Material aufweist.

10. Anordnung gemäß einem der vorhergehenden Ansprüche, wobei der Lichtleiter (8, 8') ausgebildet ist, dass die minimale, aus der Lichtaustrittsfläche austretende Lichtintensität höher ist als die maximale, auf die Lichteintrittsfläche einfallende Lichtintensität.

11. Anordnung gemäß einem der vorhergehenden Ansprüche, wobei der Lichtleiter (8) einen sich bis zur Lichtaustrittsfläche erstreckenden Endabschnitt (8c) und zwei bezüglich einer Erstreckungsrichtung des Endabschnitts sich seitlich abzweigende Ausleger (8d) aufweist, an denen jeweils eine Lichteintrittsfläche (8a) ausgebildet ist.

12. Anordnung gemäß dem vorhergehenden Anspruch, wobei die Ausleger (8d) sich in einer der Drehrichtung folgenden oder einer tangential zur Drehrichtung weisenden Richtung erstrecken.

13. Anordnung gemäß einem der vorhergehenden Ansprüche, wobei der Lichtleiter (8) wenigstens abschnittsweise, insbesondere der Endabschnitt (8c), konusförmig ausgebildet ist.

14. Anordnung gemäß einem der vorhergehenden Ansprüche, wobei die Leuchtfläche (7') eine in Drehrichtung umlaufende geschlossene Fläche ist.

15. Verwendung der Anordnung gemäß einem der vorhergehenden Ansprüche in einem Kraftfahrzeug.

## Claims

1. Arrangement comprising:
a rotary actuator (2);
an electronic pixel matrix display (2) comprising a transparent outer layer (4);
wherein the rotary actuator (3) comprises an actuation part (6) and rotary position detection means, wherein the actuation part (6) is mounted to be rotatably movable about an axis of rotation along a direction of rotation by means of bearing means (5, 12) and the rotary actuator (3) is arranged on the transparent layer (4); and wherein, further, the rotary actuator (3) comprises a light guide (8, 8'), the latter being embodied to guide light of a plurality of pixels (10, 10') of the pixel matrix display (2) from a light entry surface (8a, 8a') of the light guide (8, 8') to a light exit surface (8b, 8b') of the light guide (8, 8') in the direction of or in a luminous surface (7, 7') of the rotary actuator (3) or the actuation part (6),
**characterized in that**
the light guide (8, 8') is embodied in such a way that the light of the plurality of pixels (10, 10') is captured by way of a plurality of light entry surfaces (8a, 8a') which face the pixels (10, 10') and extend in accordance with the arrangement of the pixels (10, 10') and said light is focussed on a light exit surface (8b, 8b') that is reduced in size in relation to an overall extent of the light entry surfaces (8a, 8a').

2. Arrangement according to Claim 1, wherein the luminous surface (7, 7') is defined by the light exit surface (8a, 8a') of the light guide (8, 8').

3. Arrangement according to either of the preceding claims, wherein the light guide (8) is rigidly connected to the actuation part (6).

4. Arrangement according to any one of the preceding claims, wherein the light entry surface (8a) is defined by a matrix of the lens elements, the latter preferably being assigned to the pixels.

5. Arrangement according to any one of the preceding claims, wherein the light guide (8) has at least two reflection surfaces (8e, 8f) such that the geometric courses of light (11a, 11b, 11c) assigned to the pixels experience a direction deflection between 30° and 70°, such as 45°, between the light entry surface (8a) and light exit surface (8).

6. Arrangement according to the preceding claim, wherein at least one of the reflection surfaces (8e) has a curvature with an associated curvature plane, wherein the geometric courses of light (11a, 11b, 11c) assigned to the pixels are arranged in the curvature plane between the light entry surface (8a) and light exit surface (8b).

7. Arrangement according to any one of the preceding claims, wherein the light guide (8') is arranged in the volume defined by the actuation part (6).

8. Arrangement according to any one of the preceding claims, wherein the light guide (8) has a plane-symmetric embodiment.

9. Arrangement according to any one of the preceding claims, wherein the light guide comprises diffusely stained material.

10. Arrangement according to any one of the preceding claims, wherein the light guide (8, 8') is embodied such that the minimum light intensity emerging from the light exit surface is greater than the maximum light intensity incident on the light entry surface.

11. Arrangement according to any one of the preceding claims, wherein the light guide (8) has an end section (8c) extending up to the light exit surface and two side arms (8d) which branch off laterally in relation to a direction of extent of the end section, a light entrance surface (8a) being formed on each of said side arms.

12. Arrangement according to the preceding claim, wherein the side arms (8d) extend in a direction following the direction of rotation or in a direction pointing tangentially to the direction of rotation.

13. Arrangement according to any one of the preceding claims, wherein the light guide (8) has a conical embodiment at least in sections, in particular in the end section (8c).

14. Arrangement according to any one of the preceding claims, wherein the luminous surface (7') is a closed surface that is circumferential in the direction of rotation.

15. Use of the arrangement according to any one of the preceding claims in a motor vehicle.

## Revendications

1. Ensemble, présentant :
un actionneur rotatif (2) ;
un affichage électronique à matrice de pixels (2) qui comprend une couche extérieure transparente (4) ;
l'actionneur rotatif (3) présentant un élément d'actionnement (6) et des moyens de détection de position de rotation, l'élément d'actionnement (6) étant monté mobile en rotation autour d'un axe de rotation suivant une direction de rotation à l'aide de moyens de palier (5, 12), et l'actionneur rotatif (3) étant disposé sur la couche transparente (4) ; et dans lequel en outre l'actionneur rotatif (3) présente un guide de lumière (8, 8') qui est réalisé pour guider la lumière de plusieurs pixels (10, 10') de l'affichage à matrice de pixels (2) d'une surface d'entrée de lumière (8a, 8a') du guide de lumière (8, 8') à une surface de sortie de lumière (8b, 8b') du guide de lumière (8, 8') en direction ou dans une surface lumineuse (7, 7') de l'actionneur rotatif (3) ou de l'élément d'actionnement (6),
**caractérisé en ce que** le guide de lumière (8, 8') est réalisé de telle sorte que la lumière des plusieurs pixels (10, 10') est captée sur plusieurs surfaces d'entrée de lumière (8a, 8a') s'étendant en fonction de la disposition des pixels (10,10') et tournées vers les pixels (10, 10'), et est focalisée sur une surface de sortie de lumière (8b, 8b') réduite par rapport à une dimension totale des surfaces d'entrée de lumière (8a, 8a').

2. Ensemble selon la revendication 1, dans lequel la surface lumineuse (7, 7') est définie par la surface de sortie de lumière (8a, 8a') du guide de lumière (8, 8').

3. Ensemble selon l'une quelconque des revendications précédentes, dans lequel le guide de lumière (8) est relié rigidement à l'élément d'actionnement (6).

4. Ensemble selon l'une quelconque des revendications précédentes, dans lequel la surface d'entrée de lumière (8a) est définie par une matrice d'éléments de lentille, de préférence associés aux pixels.

5. Ensemble selon l'une quelconque des revendications précédentes, dans lequel le guide de lumière (8) présente au moins deux surfaces de réflexion (8e, 8f) de sorte que les trajets de lumière géométriques (11a, 11b, 11c) associés aux pixels subissent entre la surface d'entrée de lumière (8a) et la surface de sortie de lumière (8) un changement de direction entre 30° et 70°, comme par exemple de 45°.

6. Ensemble selon la revendication précédente, dans lequel au moins l'une des surfaces de réflexion (8e) présente une courbure avec un plan de courbure associé, les trajets de lumière géométriques (11a, 11b, 11c) associés aux pixels étant disposés dans le plan de courbure entre la surface d'entrée de lumière (8a) et la surface de sortie de lumière (8b).

7. Ensemble selon l'une quelconque des revendications précédentes, dans lequel le guide de lumière (8') est disposé dans le volume défini par l'élément d'actionnement (6).

8. Ensemble selon l'une quelconque des revendications précédentes, dans lequel le guide de lumière (8) est réalisé à symétrie de plan.

9. Ensemble selon l'une quelconque des revendications précédentes, dans lequel le guide de lumière présente un matériau à coloration diffuse.

10. Ensemble selon l'une quelconque des revendications précédentes, dans lequel le guide de lumière (8, 8') est réalisé de telle sorte que l'intensité de lumière minimale émergeant de la surface de sortie de lumière est supérieure à l'intensité de lumière maximale incidente sur la surface d'entrée de lumière.

11. Ensemble selon l'une quelconque des revendications précédentes, dans lequel le guide de lumière (8) présente une partie d'extrémité (8c) s'étendant jusqu'à la surface de sortie de lumière et deux bras (8d) bifurquant latéralement par rapport à une direction d'extension de la partie d'extrémité et auxquels est réalisée une surface d'entrée de lumière (8a) respectivement.

12. Ensemble selon la revendication précédente, dans lequel les bras (8d) s'étendent dans une direction suivant la direction de rotation ou orientée de manière tangentielle vers la direction de rotation.

13. Ensemble selon l'une quelconque des revendications précédentes, dans lequel le guide de lumière (8) est réalisé de manière conique au moins par endroits, en particulier dans la partie d'extrémité (8c).

14. Ensemble selon l'une quelconque des revendications précédentes, dans lequel la surface lumineuse (7') est une surface fermée périphérique dans la direction de rotation.

15. Utilisation de l'ensemble selon l'une quelconque des revendications précédentes dans un véhicule automobile.
